# DEMANDE DE BREVET EUROPEEN

(11) **EP 2 456 012 A1**
(43) Date de publication de la demande: **23.05.2012**
(21) Numéro de dépôt: 11189477.0
(22) Date de dépôt: 17.11.2011
(51) Int. Cl.: H01R 4/72, H01B 7/17, B29C 61/06, H02G 3/04

(54) **Barrière de protection thermo-rétractable**

(30) Priorité: 17.11.2010 FR 1059432
(71) Demandeur: Berkem Developpement, 75007 Paris (FR)
(72) Inventeur: Fahy, Olivier, 24100 LEMBRAS (FR); Kennouche, Daouïa, 69800 Saint-Priest (FR)
(74) Mandataire: Coquel, Jean-Marc

(57) **Abrégé**

L'invention concerne une barrière de protection pour un objet semi-enterré ou enterré. Selon l'invention, cette barrière de protection comporte une feuille de matière plastique (23) longitudinale dont la dimension transversale est instable à la chaleur, ladite feuille comportant au moins un agent anti-racine et/ou un agent insecticide de manière à former une barrière matérielle contre les racines et/ou les insectes vivants ou se déplaçant dans le sol.

## Description

La présente invention concerne une barrière de protection thermo-rétractable pour protéger des objets semi-enterrés ou enterrés contre les racines et les insectes vivants ou se déplaçant dans le sol. Elle concerne également une enveloppe tubulaire thermo-rétractable formée à partir d'une telle barrière de protection.

Il est connu que les conduits souterrains utilisés tant dans le bâtiment, l'industrie que dans la production, le transport et la distribution d'eau et d'énergie sont victimes de dégradations biologiques qui au fil du temps sont susceptibles d'altérer ou détruire leur fonctionnalité.

S'entendent par conduit souterrains aussi bien les conduites d'alimentation ou d'écoulement d'eau d'un bâtiment ou d'une installation que les tuyaux destinés au passage de câbles électriques, pneumatiques ou optiques, ainsi que les drains destinés à la collecte et l'élimination des eaux souterraines.

On observe que ces conduits enterrés dans le sol, ou les joints dont ils sont pourvus, sont à terme colonisés par les racines des végétaux et divers invertébrés vivants ou se déplaçant dans le sol.

Les exemples de drains obstrués par des racines sont nombreux et nécessitent de lourdes et coûteuses opérations de remplacement.

Par ailleurs, les termites dégradent fréquemment les conduites de circulation ou d'alimentation en eau afin d'y puiser le liquide nécessaire à leur survie.

Or, le traitement dans la masse de ces conduits n'est pas toujours possible pour des raisons physiques ou chimiques.

De même, le traitement par incorporation de substances biocides dans la masse des matériaux constitutifs de conduites de liquide à usage alimentaire est, pour d'évidentes raisons de toxicité, exclu.

L'objectif de la présente invention est donc de proposer une protection matérielle s'interposant entre le sol et l'élément à protéger, qui soit simple et économique, facile à mettre en oeuvre et permettant de prévenir ou de minimiser les dommages causés par les racines et les termites ou autres insectes.

Un autre objet de la présente invention est une protection qui vienne enserrer totalement l'élément à protéger tout en étant aisée à positionner autour de cet élément.

A cet effet, l'invention concerne une barrière de protection souple pour un objet semi-enterré ou enterré.

Selon l'invention, cette barrière de protection comporte une feuille de matière plastique longitudinale dont la dimension transversale est instable à la chaleur, cette feuille comportant au moins un agent anti-racine et/ou un agent insecticide de manière à former une barrière matérielle contre les racines et/ou les insectes vivants ou se déplaçant dans le sol.

De préférence, cette feuille comporte à la fois un agent anti-racine et un agent insecticide de manière à protéger efficacement l'objet enterré ou semi-enterré.

On entend par "une feuille de matière plastique longitudinale" qu'il s'agit d'une feuille en bande ou encore d'une feuille se présentant sous la forme d'une bande.

Dans différents modes de réalisation particuliers de cette barrière de protection, chacun ayant ses avantages particuliers et susceptibles de nombreuses combinaisons techniques possibles:
- cette barrière est d'un seul tenant,
   On entend par la "barrière est d'un seul tenant" que cette barrière de protection est obtenue d'une seule pièce et ne résulte donc pas de l'assemblage d'éléments initialement distincts.
- la barrière a une structure monocouche ou multicouches,
- cette barrière ayant une structure multicouches, elle comprend une couche externe comportant un agent anti-racine et une couche interne comportant un agent insecticide,
- au moins la couche externe est formée à partir d'un ou plusieurs polymères thermo-rétractables ou d'un mélange d'un ou plusieurs polymères thermo-rétractable et d'un ou plusieurs polymères non thermo-rétractables,

De préférence, les couches externe et interne présentent une dimension transversale instable à la chaleur.

Avantageusement ladite au moins une couche externe comprendra de 10% à 50% en poids d'au moins un polymère thermo-rétractable et de 90% à 50% en poids d'au moins un polymère non thermo-rétractable.

Ainsi, on s'assurera qu'après rétraction du film, ou de l'enveloppe tubulaire formée par assemblage des bords latéraux de ce film, ladite au moins une couche externe présentera les mêmes propriétés mécaniques (résistance à la déchirure et/ou à l'impact, module d'élasticité, allongement à la rupture, ...) qu'un film à base uniquement de polymère non thermo-rétractable. La préservation pour ce film thermo-rétractable des propriétés mécaniques connues pour les films non thermo-rétractables permet d'assurer le respect des critères de garantie décennale dans le domaine du bâtiment et de la construction.

A titre purement illustratif, le ou les polymères thermo-rétractables seront choisis dans le groupe comprenant un copolymère éthylène-(meth)acrylate d'alkyle, un copolymère d'éthylène et d'ester vinylique d'acide carboxylique saturé, un copolymère éthylène-acétate de vinyle, un polychlorure de vinylydène (PVDC), un fluoropolymère tel que le polymère perfluoro(éthylène-propylène) (FEP) ou le Perfluoroalkoxy (PFA).

De préférence, la couche externe comporte également au moins un absorbeur d'ultraviolet (UV).

Avantageusement, la couche externe a une perméabilité à la vapeur d'eau inférieure ou égale à 1,5 g/m²/jour.1013,25 hPa, telle que la perméabilité à la vapeur d'eau est mesurée sous une pression de 1013,25 hPa sur une surface de 1 m² pendant 24 heures à 25°C et à une humidité relative de 60%.

A titre purement illustratif, le ou les polymères non thermo-rétractables de la couche externe sont alors choisis dans le groupe comprenant le polyéthylène, le polypropylène, le copolymère réticulé d'éthylène et d'acétate de vinyle, le copolymère d'éthylène-alcool vinylique et le polybutène.
- cette couche externe a de plus une perméabilité à l'oxygène inférieure à 5000 cm³/m²/jour.1013,25 hPa, telle que la perméabilité à la l'oxygène est mesurée sous une pression de 1013,25 hPa sur une surface de 1 m² pendant 24 heures à 25°C et à une humidité relative de 60%,

Un exemple de polymère à base de polyoléfine ayant à la fois une perméabilité inférieure à la vapeur d'eau mentionnée ci-dessus et une perméabilité inférieure à l'oxygène mentionnée ci-dessus est le polyéthylène. De manière plus générale, la couche interne chargée d'insecticide anti-termite est renforcée par pelliculage de sa face active venant au contact du sol à l'aide d'une couche externe de polymère formant une barrière étanche aux conditions de pH du milieu susceptible d'entrainer la dégradation du principe actif insecticide.

Alternativement, cette barrière comprend de plus une couche intermédiaire, cette couche intermédiaire ayant une perméabilité à l'oxygène inférieure à 5000 cm³/m²/jour.1013,25 hPa, telle que la perméabilité à la l'oxygène est mesurée sous une pression de 1013,25 hPa sur une surface de 1 m² pendant 24 heures à 25°C et à une humidité relative de 60%,

Un exemple de polymère à base de polyoléfine ayant une perméabilité inférieure à l'oxygène mentionnée ci-dessus est le polyéthylène.
- cette couche externe a une épaisseur comprise entre 10 et 150 µm, et encore mieux entre 50 et 100 pm, de manière à limiter la surface de dégradation de la couche externe causée par des insectes avant leur contact avec l'agent insecticide de ladite couche interne,
- les couches interne et externe sont obtenues avec des résines à base de polyoléfines distinctes,
- cette barrière ayant une structure monocouche, elle comprend un mélange d'une ou plusieurs polyoléfines non thermo-rétractables et d'un ou plusieurs polymères thermo-rétractables, et d'au moins un agent anti-racine et un agent insecticide,

La ou les polyoléfines non thermo-rétractables pourront être choisies dans le groupe comprenant le polyéthylène (PE), le polypropylène (PP), un copolymère d'éthylène-propylène (EPR), le polybutène (PB), le polyméthylpentène (PMP), l'éthylène-acétate de vinyle (EVA) et le polyamide (PA).

A titre illustratif, le ou les polymères thermo-rétractables seront choisis dans le groupe comprenant un copolymère éthylène-(meth)acrylate d'alkyle, un copolymère d'éthylène et d'ester vinylique d'acide carboxylique saturé, un copolymère éthylène-acétate de vinyle, un polychlorure de vinylydène (PVDC), un fluoropolymère tel que le polymère perfluoro(éthylène-propylène) (FEP) ou le Perfluoroalkoxy (PFA).

Lorsque le polymère thermo-rétractable est un copolymère éthylène-(méth)acrylate d'alkyle, les alkyles peuvent avoir jusqu'à 24 atomes de carbone. Des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle.

Lorsque le polymère thermo-rétractable est un copolymère d'éthylène et d'ester vinylique d'acide carboxylique saturé, l'ester peut être l'acétate de vinyle, le propionate de vinyle ou encore le butyrate de vinyle. Avantageusement, dans les copolymères de l'éthylène et d'un (méth)acrylate ou d'un ester vinylique, la teneur en comonomère est comprise entre 4 et 30 % en poids de manière à assurer une meilleure rétraction de la barrière de protection.

De préférence, cette structure monocouche comporte également au moins un absorbeur d'ultraviolet (UV).
- cette feuille comprend au moins un additif choisi dans le groupe comprenant un agent glissant, un agent antistatique, un agent anti-bloquant, un colorant, un pigment et des combinaisons de ces éléments,
- l'agent anti-racine est un dérivé chlorophénoxy,

Par exemple, cet agent anti-racine est l'acide 2-(4-chloro-2-méthylphénoxy) propionique, encore appelé acide MCPP.

Il est à noter que cet agent anti-racine est une substance chimique à propriétés non pesticide et non biocide. L'agent anti-racine n'a pas d'effet mortel vis-à-vis des racines et arbres/plantes.

L'effet anti-racine est un effet de contact. Les pointes des racines après contact avec la barrière se lignifient, c'est-à-dire que la croissance de ces racines est d'abord ralentie pour ensuite être stoppée. En aucun cas, l'arbre ou la plante ne meurt car les autres racines par effet mémoire se déploient dans des zones plus favorables. La préservation de la plante ou de l'arbre est ainsi avantageusement assurée.

L'agent anti-racine est donc un agent anti-racine à effet de contact.
- ledit insecticide est choisi dans la famille des pyréthrinoïdes, néonicotinoïdes ou carbamates.

A titre illustratif, on pourra choisir cet insecticide dans le groupe comprenant la bifenthrine, l'alpha-cyperméthrine, la cyperméthrine, la perméthrine.

L'invention concerne encore une gaine thermo-rétractable pour protéger une conduite ou un tuyau. Selon l'invention, cette gaine est constituée une barrière de protection telle que décrite précédemment.

Cette gaine thermo-rétractable est alors formée par assemblage des bords latéraux de la feuille longitudinale.

Cette gaine est particulièrement adaptée pour venir enserrer des conduites, des paquets de gaines électriques destinés à être enterrés afin d'assurer leur protection.

Puisque cette gaine est rapportée, elle peut avantageusement être mise en oeuvre pour protéger des conduites transportant des eaux destinées à la consommation sans présenter de nocivité pour le consommateur final.

Avantageusement, lorsque la conduite à protéger fait office de drain, cette gaine est micro-perforée afin de permettre un écoulement des liquides.

La présente invention concerne également un procédé de fabrication d'une barrière de protection thermo-rétractable telle que décrite précédemment.

Selon l'invention, on réalise les étapes suivantes :
a) on introduit et on repartie de manière homogène au moins un agent anti-racine et/ou agent insecticide dans une matière plastique de base,
b) on fabrique à partir de la composition ainsi obtenue et fondue, une feuille en bande que l'on étire transversalement tandis qu'on la chauffe au-dessus du point de fusion cristalline de la matière plastique de base, ce point de fusion étant en dessous du point de décomposition dudit agent anti-racine et/ou dudit agent insecticide de manière à ne pas déstabiliser ledit ou lesdits agents,
c) on refroidit ladite feuille en bande ainsi obtenue.

De préférence, avant de refroidir ladite feuille, on met ladite feuille en forme de tube ou sensiblement tubulaire. On forme ainsi un tube ou une enveloppe tubulaire thermo-rétractable.

Avantageusement, à l'étape a), on introduit ledit au moins un agent anti-racine et/ou agent insecticide dans ladite matière plastique de base à une température comprise entre 150 °C et 200 °C, et plus précisément entre 170 °C et 200 °C dans le cas de PEBD.

De préférence, on mélange de 10% à 50% en poids d'au moins un polymère thermo-rétractable à 90% à 50% en poids de polymère non thermo-rétractable pour former ladite matière plastique de base.

La ou les polyoléfines non thermo-rétractables pourront être choisies dans le groupe comprenant le polyéthylène (PE), le polypropylène (PP), un copolymère d'éthylène-propylène (EPR), le polybutène (PB), le polyméthylpentène (PMP), l'éthylène-acétate de vinyle (EVA) et le polyamide (PA).

A titre illustratif, le ou les polymères thermo-rétractables seront choisis dans le groupe comprenant un copolymère éthylène-(meth)acrylate d'alkyle, un copolymère d'éthylène et d'ester vinylique d'acide carboxylique saturé, un copolymère éthylène-acétate de vinyle, un polychlorure de vinylydène (PVDC), un fluoropolymère tel que le polymère perfluoro(éthylène-propylène) (FEP) ou le Perfluoroalkoxy (PFA).

Avantageusement, au moins un agent glissant peut être incorporé dans la composition fondue, préalablement à la préparation de la feuille par extrusion. Cet agent glissant est incorporé de manière à être présent dans les couches les plus externes de la feuille. Un tel agent glissant peut par exemple être choisi parmi les amides d'acides gras comme l'érucamide et peut être introduit à raison de 200 à 5 000 ppm.

En général, un tel agent glissant est incorporé dans la feuille si l'on ne prévoit pas de l'imprimer. Cet agent glissant permet de réduire les frottements résultant d'un contact entre la barrière de protection thermo-rétractable avec une autre surface en matière plastique ou autre.

A titre illustratif, cet agent glissant facilitera le positionnement de l'enveloppe tubulaire thermo-rétractable par rapport à une conduite ou à un paquet de gaines électriques à protéger. Il est en effet connu qu'en essayant de faire glisser un tube sur des câbles de très grandes dimensions, ces câbles deviennent difficiles à introduire dans l'extrémité opposée du tube.

Au moins un agent anti-bloquant peut également être incorporé dans la composition fondue, préalablement à la préparation de la feuille par extrusion. Cet agent anti-bloquant est incorporé de manière à être présent dans les couches les plus externes de la feuille. Cet agent anti-bloquant a pour fonction de diminuer la tendance de la feuille à adhérer sur elle-même lorsqu'elle est enroulée en bobine, de façon à faciliter son déroulement.

Un tel agent anti-bloquant comprend généralement des particules de charge minérale telle que la silice.

Préalablement à son utilisation, il est possible de conférer à la feuille des propriétés antistatiques. Ces propriétés antistatiques permettent à la feuille de se maintenir bien à plat et de bien glisser sur les machines de fabrication, sans avoir tendance à s'enrouler sur elle-même, ce qui risquerait de perturber, voire bloquer tout le processus de fabrication.

Par exemple, les propriétés antistatiques peuvent être apportées à la feuille par enduction de ses couches externes au moyen d'une solution d'un agent antistatique. Des agents antistatiques de la famille des alkylamines sont connus.

L'invention concerne enfin l'utilisation de l'enveloppe tubulaire formée à partir de ladite barrière de protection telle que décrite précédemment ou obtenue par le procédé de fabrication tel que décrit précédemment, pour assurer la jonction étanche d'un film de protection et d'un manchon de protection, ledit film et ledit manchon étant destinés à former une barrière matérielle d'un objet enterré ou semi-enterré contre les racines et/ou les insectes vivants ou se déplaçant dans le sol.

Selon l'invention, on réalise les étapes suivantes:
a) on réalise une découpe dans ledit film de protection pour permettre le passage dudit manchon de protection,
b) on introduit ledit manchon au travers de ladite découpe en s'assurant qu'une partie de recouvrement dudit film de protection formant alors saillie du reste dudit film de protection recouvre au moins partiellement le pourtour de la partie dudit manchon ayant passé au travers de ladite découpe,
c) on introduit par l'extrémité libre de ladite partie dudit manchon ayant passé au travers de ladite découpe, ladite enveloppe tubulaire et on positionne ladite enveloppe tubulaire de sorte qu'elle recouvre au moins partiellement ladite partie de recouvrement et ledit manchon,
d) on chauffe ladite enveloppe tubulaire de sorte qu'elle enserre ladite partie de recouvrement dudit film de protection et ledit manchon de protection.

Bien entendu, le film de protection et le manchon de protection comprennent chacun moins un agent anti-racine et/ou agent insecticide. On obtient ainsi une barrière matérielle formant un écran intégral aux racines et/ou aux termites, cette barrière comportant un film plan ou sensiblement plan et un manchon formant une cheminée d'axe principal hors du plan de ce film, cette cheminée permettant le passage par exemple de gaines électriques.

De préférence, ayant réalisé à l'étape a) une découpe en croix dudit film de protection, on s'assure à l'étape b) que l'ensemble des portions libres dudit film résultant de cette découpe et solidaires dudit film, entourent la partie dudit manchon ayant passé au travers de ladite découpe. Ces portions libres forment alors la partie de recouvrement dudit film de protection.

Avantageusement, à l'étape d), on applique une température homogène sur l'ensemble de ladite enveloppe tubulaire pour éviter l'apparition d'un point de rupture locale dans ladite enveloppe.

On entend par "homogène" que cette température appliquée à la surface de l'enveloppe tubulaire ne varie pas d'au plus 20 °C sur l'ensemble de cette surface.

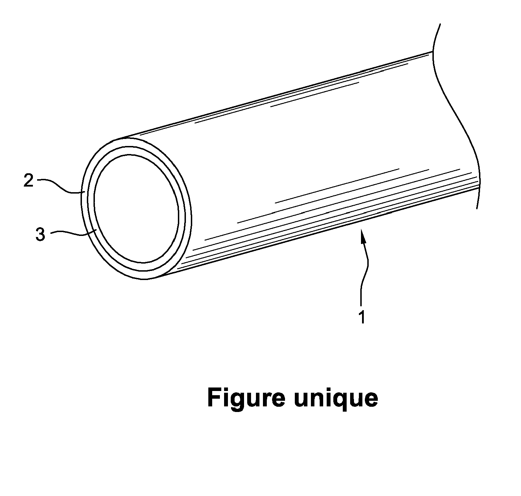

L'invention sera décrite plus en détail en référence à l'unique dessin annexé, lequel représente schématiquement une enveloppe de protection thermo-rétractable selon un mode de réalisation préféré de l'invention;

La Figure unique montre une enveloppe thermo-rétractable, ou gaine thermo-rétractable, pour la protection 1 de gaines électriques selon un mode de réalisation préféré de l'invention.

Cette gaine de protection 1 qui est d'un seul tenant, peut être obtenue notamment par extrusion-soufflage multicouche.

Cette gaine de protection 1 comporte une couche externe 2 et une couche interne 3. La couche interne 3 est destinée à être placée du côté des gaines électriques à protéger tandis que la couche externe 2 est destinée à être en contact avec le sol.

La couche externe 2 comporte un agent anti-racine et la couche interne 3 comporte un insecticide. La couche externe 2 assure avantageusement la protection de la couche interne 3 dotée de propriété anti-termites.

En effet, au fil du temps, des racines peuvent se développer dans l'environnement immédiat de la gaine de protection 1. Or, durant leur croissance, ces racines pourraient venir percer la couche comportant l'insecticide 3 si celle-ci n'était pas protégée par la couche externe 2 comportant l'agent anti-racine. Cette couche comportant l'insecticide dépourvu ou non d'action systémique, n'est en effet pas phytotoxique. En cheminant dans le réseau racinaire qu'ils ont investi, les termites pourraient alors franchir sans gène une gaine uniquement dotée d'un insecticide, cette gaine ayant été préalablement pénétrée en de multiples points par les racines.

Par ailleurs, la couche externe 2 forme avantageusement un écran empêchant la migration de l'insecticide contenu dans la couche interne 3 vers le milieu extérieur environnant la gaine de protection 1. De même, l'interposition d'une couche externe 2 entre le milieu extérieur environnant la gaine et la couche interne 3 contenant l'actif anti termites évite que les conditions environnementales à la gaine ne dégradent l'actif anti termites, le rendant inefficace. Les propriétés de l'actif anti termites sont ainsi conservées dans le temps.

L'actif anti-racine de la couche externe 2 est, par exemple, l'acide 2-(4-chloro-2-méthylphénoxy) propionique (n° CAS 93-65-2) intégré dans la masse du polymère constituant la couche externe. L'acide 2-(4-chloro-2-méthylphénoxy) propionique (n° CAS 93-65-2) par exemple à des doses variant de 0,10 % 2,00 % (m/m) exerce une forte action anti-racine. Alternativement, cet actif anti-racine peut être un herbicide chlorophénoxylé.

La couche externe 2 est obtenue à partir d'une matière plastique de base comprenant 20% en poids de polymère thermo-rétractable et 80% en poids de polymère non thermo-rétractable. Le polymère non thermo-rétractable est un polyéthylène basse densité (PEBD) tandis que le polymère thermo-rétractable est un copolymère d'éthylène-acétate de vinyle (EVA). Avantageusement, ce copolymère contient de 4% à 30 % en poids d'acétate de vinyle.

L'exposition de l'enveloppe thermo-rétractable à une température égale ou supérieure à la température de ramollissement du polymère thermo-rétractable entraine une rétraction de l'ensemble de la structure de l'enveloppe qui vient alors enserrer les gaines électriques à protéger. La source de chaleur mise en oeuvre pour chauffer l'enveloppe peut être un décapeur thermique ou encore un chalumeau.

La température appliquée est toutefois inférieure à la température de décomposition des agents anti-racine et insecticide pour éviter de déstabiliser ces agents, ce qui pourrait les rendre inopérants.

Cette couche externe 2 comporte également des actifs absorbeurs d'ultraviolet connus de l'homme de l'art, tels que le noir de carbone, les salicylates, benzoates de phényle et benzophénones par exemple.

Cette couche externe 2 peut représenter de 10 à 80 % de l'épaisseur totale de la gaine de protection 1.

Dans leurs explorations du milieu, les insectes cibles viennent au contact de la couche externe 2 qui ne les repousse pas. Tentant de la franchir, ils érodent la couche externe 2 et parviennent sur une infime surface à la couche interne 3 dont la teneur en insecticide n'ayant pas diminuée au contact du milieu extérieur environnant l'enveloppe 1, génère rapidement une mortalité élevée sur les insectes cibles. Les ruptures de la couche externe 2 sous l'action des termites sont d'une surface trop faible pour que le milieu extérieur environnant l'enveloppe 1 ne puisse dégrader l'insecticide.

La couche interne 3 a, par exemple, une épaisseur comprise entre 10 µm et 300 pm. Cette couche interne 3 qui vient au contact des gaines électriques à protéger constitue la barrière anti-termites proprement dite. Elle contient un insecticide de la famille des pyréthrinoïdes intégré à forte dose dans la masse du polymère constitutif de la couche interne.

La bifenthrine (n ° CAS 82657-04-3) à des doses variant de 0,05 % à 2,00 % (m/m) dans une couche de polyéthylène basse densité convient sans être exclusif. L'alpha-cypermétrine la perméthrine, la cyperméthrine associées à un polymère choisi dans le groupe comprenant le polyéthylène basse densité, le polyéthylène haute densité, le polypropylène et l'éthylène-acétate de vinyle conviennent également.

Aux doses énoncées, l'insecticide exerce une action rapide et létale à l'encontre des termites ce qui interdit tout franchissement de l'enveloppe de protection 1. Cette couche interne 3 peut représenter de 20 à 90 % de l'épaisseur totale de l'enveloppe de protection.

L'épaisseur totale du matériau constitué des deux couches décrites est susceptible de varier de 50 pm à 5 millimètres selon la nature et la disposition de l'élément à protéger.

## Revendications

1. Barrière de protection pour un objet semi-enterré ou enterré, **caractérisée en ce qu'**elle comporte une feuille de matière plastique longitudinale dont la dimension transversale est instable à la chaleur, ladite feuille comportant au moins un agent anti-racine et/ou un agent insecticide de manière à former une barrière matérielle contre les racines et/ou les insectes vivants ou se déplaçant dans le sol.

2. Barrière selon la revendication 1, **caractérisée en ce qu'**elle est d'un seul tenant.

3. Barrière selon la revendication 1 ou 2, **caractérisée en ce qu'**elle a une structure monocouche ou multicouches.

4. Barrière selon la revendication 3, **caractérisée en ce que** ladite barrière ayant une structure multicouches, elle comprend une couche externe (2) comportant un agent anti-racine et une couche interne (3) comportant un agent insecticide.

5. Barrière selon la revendication 4, **caractérisée en ce que** ladite couche externe (2) comporte de plus au moins un absorbeur d'ultraviolet.

6. Barrière selon la revendication 4 ou 5, **caractérisée en ce que** la couche externe (2) a une perméabilité à la vapeur d'eau inférieure ou égale à 1,5 g/m²/jour.1013,25 hPa, telle que la perméabilité à la vapeur d'eau est mesurée sous une pression de 1013,25 hPa sur une surface de 1 m² pendant 24 heures à 25°C et à une humidité relative de 60%.

7. Barrière selon l'une des revendications 4 à 6, **caractérisée en ce que** ladite couche externe a de plus une perméabilité à l'oxygène inférieure à 5000 cm³/m²/jour.1013,25 hPa, telle que la perméabilité à la l'oxygène est mesurée sous une pression de 1013,25 hPa sur une surface de 1 m² pendant 24 heures à 25°C et à une humidité relative de 60%.

8. Barrière selon l'une des revendications 4 à 6, **caractérisée en ce que** ladite barrière comprend de plus une couche intermédiaire, ladite couche intermédiaire ayant une perméabilité à l'oxygène inférieure à 5000 cm³/m²/jour.1013,25 hPa, telle que la perméabilité à la l'oxygène est mesurée sous une pression de 1013,25 hPa sur une surface de 1 m² pendant 24 heures à 25°C et à une humidité relative de 60%.

9. Barrière selon l'une quelconque des revendications 4 à 8, **caractérisée en ce qu'**au moins ladite couche externe est formée à partir d'un ou plusieurs polymères thermo-rétractables ou d'un mélange d'un ou plusieurs polymères thermo-rétractable et d'un ou plusieurs polymères non thermo-rétractables.

10. Barrière selon l'une quelconque des revendications 4 à 9, **caractérisée en ce que** ladite couche externe a une épaisseur comprise entre 10 et 150 µm, et encore mieux entre 50 et 100 pm, de manière à limiter la surface de dégradation de la couche externe causée par des insectes avant leur contact avec l'agent insecticide de ladite couche interne.

11. Barrière selon la revendication 3, **caractérisée en ce que** ladite barrière ayant une structure monocouche, elle comprend un mélange d'une ou plusieurs polyoléfines non thermo-rétractables et d'un ou plusieurs polymères thermo-rétractables, et d'au moins un agent anti-racine et un agent insecticide.

12. Barrière selon la revendication 11, **caractérisée en ce que** la ou les polyoléfines non thermo-rétractables sont choisies dans le groupe comprenant le polyéthylène (PE), le polypropylène (PP), un copolymère d'éthylène-propylène (EPR), le polybutène (PB), le polyméthylpentène (PMP), l'éthylène-acétate de vinyle (EVA) et le polyamide (PA).

13. Barrière selon la revendication 11 ou 12, **caractérisée en ce qu'**elle comporte de plus au moins un absorbeur d'ultraviolet.

14. Barrière selon la revendication 9 ou 12, **caractérisée en ce que** le ou les polymères thermo-rétractables sont choisis dans le groupe comprenant un copolymère éthylène-(meth)acrylate d'alkyle, un copolymère d'éthylène et d'ester vinylique d'acide carboxylique saturé, un copolymère éthylène-acétate de vinyle, un polychlorure de vinylydène (PVDC), un fluoropolymère tel que le polymère perfluoro(éthylène-propylène) (FEP) ou le Perfluoroalkoxy (PFA).

15. Barrière selon l'une quelconque des revendications 1 à 14, **caractérisée en ce que** ladite feuille comprend au moins un additif choisi dans le groupe comprenant un agent glissant, un agent antistatique, un agent anti-bloquant, un colorant, un pigment et des combinaisons de ces éléments.

16. Procédé de fabrication d'une barrière de protection rétractable selon l'une quelconque des revendications 1 à 15, **caractérisé en ce qu'**on réalise les étapes suivantes :
a) on introduit et on repartie de manière homogène au moins un agent anti-racine et/ou agent insecticide dans une matière plastique de base,
b) on fabrique à partir de la composition ainsi obtenue et fondue, une feuille en bande que l'on étire transversalement tandis qu'on la chauffe au-dessus du point de fusion cristalline de la matière plastique de base, ce point de fusion étant en dessous du point de décomposition dudit agent anti-racine et/ou dudit agent insecticide de manière à ne pas déstabiliser ledit ou lesdits agents,
c) on refroidit ladite feuille en bande ainsi obtenue.

17. Procédé selon la revendication 16, **caractérisé en ce qu'**avant de refroidir ladite feuille, on met ladite feuille en forme de tube ou sensiblement tubulaire.

18. Procédé selon la revendication 16 ou 17, **caractérisé en ce qu'**à l'étape a), on introduit ledit au moins un agent anti-racine et/ou agent insecticide dans ladite matière plastique de base à une température comprise entre 150 °C et 200 °C.

19. Procédé selon l'une quelconque des revendications 16 à 18, **caractérisé en ce qu'**on mélange de 10% à 50% en poids d'au moins un polymère thermo-rétractable à 90% à 50% en poids de polymère non thermo-rétractable pour former ladite matière plastique de base.

20. Utilisation de l'enveloppe tubulaire formée à partir de ladite barrière de protection selon l'une quelconque des revendications 1 à 15 ou obtenue par le procédé selon l'une des revendications 16 à 19 pour assurer la jonction étanche d'un film de protection et d'un manchon de protection, ledit film et ledit manchon étant destinés à former une barrière matérielle d'un objet enterré ou semi-enterré contre les racines et/ou les insectes vivants ou se déplaçant dans le sol, **caractérisée en ce qu'**on réalise les étapes suivantes:
a) on réalise une découpe dans ledit film de protection pour permettre le passage dudit manchon de protection,
b) on introduit ledit manchon au travers de ladite découpe en s'assurant qu'une partie de recouvrement dudit film de protection formant alors saillie du reste dudit film de protection recouvre au moins partiellement le pourtour de la partie dudit manchon ayant passé au travers de ladite découpe,
c) on introduit par l'extrémité libre de ladite partie dudit manchon ayant passé au travers de ladite découpe, ladite enveloppe tubulaire et on positionne ladite enveloppe tubulaire de sorte qu'elle recouvre au moins partiellement ladite partie de recouvrement et ledit manchon,
d) on chauffe ladite enveloppe tubulaire de sorte qu'elle enserre ladite partie de recouvrement dudit film de protection et ledit manchon de protection.

21. Utilisation selon la revendication 20, **caractérisée en ce qu'**ayant réalisé à l'étape a) une découpe en croix dudit film de protection, on s'assure à l'étape b) que l'ensemble des portions libres dudit film résultant de cette découpe et solidaires dudit film, entourent la partie dudit manchon ayant passé au travers de ladite découpe.

22. Utilisation selon la revendication 20 ou 21, **caractérisée en ce qu'**à l'étape d), on applique une température homogène sur l'ensemble de ladite enveloppe tubulaire pour éviter l'apparition d'un point de rupture locale dans ladite enveloppe.
